# EUROPEAN PATENT SPECIFICATION

(11) **EP 3 939 426 B1**
(45) Date of publication and mention of the grant of the patent: **01.11.2023**
(21) Application number: 21185654.7
(22) Date of filing: 14.07.2021
(51) Int. Cl.: A01M 7/00, A01B 73/06, A01C 23/00

(54) **AGRICULTURAL DEVICE FOR SPREADING A PUMPABLE MEDIUM OVER AGRICULTURAL LAND USING A SPREADER ARM AND METHOD OF ADJUSTING A WORKING WIDTH OF A VEHICLE PROVIDED WITH SUCH AN AGRICULTURAL DEVICE**
LANDWIRTSCHAFTLICHE VORRICHTUNG ZUR VERTEILUNG EINES PUMPBAREN MEDIUMS ÜBER EINE LANDWIRTSCHAFTLICHE FLÄCHE MITHILFE EINES SPREIZARMS UND VERFAHREN ZUM ANPASSUNG EINER ARBEITSBREITE EINES MIT SOLCH EINER LANDWIRTSCHAFTLICHEN VORRICHTUNG AUSGESTATTETEN FAHRZEUGS
DISPOSITIF AGRICOLE D'ÉPANDAGE D'UN MILIEU POMPABLE SUR UN TERRAIN AGRICOLE À L'AIDE D'UN BRAS D'ÉPANDAGE ET PROCÉDÉ DE RÉGLAGE DE LARGEUR DE TRAVAIL D'UN VÉHICULE ÉQUIPÉ D'UN TEL DISPOSITIF AGRICOLE

(30) Priority: 15.07.2020 DE 102020118643
(43) Date of publication of application: 19.01.2022
(73) Proprietor: Bomech B.V., 7665 SH Albergen (NL)
(72) Inventor: SCHURINK, Gerard Johannes, 7665 SH Albergen (NL); HOEK, Johannes Bernardus Maria, 7665 SH Albergen (NL)
(74) Representative: Patentwerk B.V.

(56) References cited:
- EP-A2- 0 357 154
- EP-A2- 2 022 329
- EP-B1- 1 813 150
- KR-B1- 102 130 479
- US-A- 6 085 993

## Description

The invention relates to an agricultural device for spreading a pumpable medium over agricultural land, according to the preamble of Claim 1. In addition, the invention relates to a method for adjusting the working width of an agricultural device for spreading a pumpable medium according to the invention which is displaceable by means of a vehicle.

Such agricultural devices are well-known, for example for spreading liquid manure over (agricultural) land, as spraying device for spraying liquid crop-protection products or as sowing device for sowing a piece of land. In order to allow operations to be carried out as efficiently as possible, such agricultural devices are provided with one or more treatment arms which can be oriented in such a way that, in their operating position, they extend at right angles to the direction of travel of a supporting vehicle in order to be able to treat a strip of (agricultural) land which is as wide as possible in a single treatment course. In order to also be able to move the agricultural device over (public) roads, the treatment arm(s) is/are designed in such a way that they can be folded into a maximum width which virtually corresponds to the width of the supporting vehicle. With the prior-art vehicles, the arms often extend on either side of the supporting vehicle. Generally, the vehicle is provided with a tank, with the arms extending on either side of the tank, but it is also possible for the pumpable medium to be supplied from a separate medium buffer in the form of an external mobile or stationary supply system which is situated at a short distance from the supporting vehicle. It should be possible for the spreader arms to be folded in a compact manner, but to have a working width which is as large as possible in the unfolded operating state. In this case, it should be taken into account that, in the unfolded operating state, the arms may be subjected to heavy loads, inter alia caused by abrupt movements by the supporting vehicle, the presence of pumpable medium in the lines (resulting in an increase in the weight to be carried) and local differences in height in the ground which the spreader arms should be able to follow. A description of such a device is given, for example, in German Utility Model 06008173.9 by the present Applicant.

The German patent publication DE 202015001067 U1 also describes such an agricultural device, but also discloses that the spreader arms consist of portions which are slidable with respect to each other in a longitudinal direction. These mutually slidable spreader arm portions are displaceable between two positions in which the spreader arm portions more or less overlap one another. The spreader arm portions are furthermore provided with medium outlets. United States patent publication US6085993 A1 describes an agricultural device for spraying of crops comprising mutually slidable spreader arm portions.

One of the drawbacks of using the prior-art spreader arms is the limited reach which these have. There is an increasing demand for agricultural devices with an ever larger working width. Also, due to the often complicated structures which are necessary for the spreader arms, the maximum reach is limited. The existing structures are deemed necessary in order to be able to support the weight of the arms and the pumpable medium in the line.

It is the object of the invention to provide an agricultural device of the type mentioned in the preamble, wherein a more stable structure can be achieved which is more flexible in use while retaining the advantages of the prior art.

In this application, the terms agricultural device and agricultural land are used. However, these terms are not limiting and should therefore be interpreted broadly to also include other ground cultivation tools and and/or other types of ground.

This object is achieved by an agricultural device of the type mentioned in the preamble whose medium outlets of the at least two spreader arm portions are rotatable about the longitudinal axis in directions turned away from one another. As the spreader arm consists of at least two portions, each provided with medium outlets, and wherein these medium outlets are rotatable in directions turned away from each other, a structure is obtained which has a better weight balance than the prior-art agricultural devices. The expression rotatable about a longitudinal axis is understood to mean to be rotatable about an axis which runs parallel to the longitudinal direction of the spreader arm. It is desirable for the medium outlets to be rotatable between a position in which the medium outlets are substantially turned upwards and a position in which the medium outlets are turned substantially towards the ground. This makes it possible to move the medium outlets upwards in a transport position of the agricultural device, as a result of which they will not readily lose/spill medium during transportation in an uncontrolled manner. Obviously, when dispensing medium, the medium outlets are preferably rotated to face the ground.

The pivotability of the medium outlets in directions turned away from each other has the advantage that the medium outlets on either side of the spreader arm can balance one another during folding in and folding out. This not only increases the positioning accuracy of the spreader arm, but this also makes it possible to design the spreader arm to be more light-weight and/or makes the latter less susceptible to failure as it is subjected to smaller loads. Thus, the spreader arms may be of a more compact construction. In addition, rotating the medium outlets in directions which are turned away from each other results in an improved weight balance of the spreader arm during rotation. An improved weight balance may also make it possible for the structure to be made relatively more lightweight.

Yet another advantage of the pivotability of the medium outlets in directions turned away from each other is that the spreader arm portions are also situated a very short distance apart; after all, the medium outlets no longer have to be situated between the spreader arm portions. A shorter distance between the spreader arm portions but that the spreader arm(s) can be made more compact, which is inter alia advantageous when moving the agricultural device with folded-in spreader arms on a road. In addition, a more compact construction of the spreader arm(s) contributes further to an improved stability of the structure. Yet another advantage of the pivotability of the medium outlets in directions turned away from each other is that this results in greater flexibility in the displaceability of the medium outlets with respect to each other. The medium outlets of different spreader arm portions thus no longer obstruct each other at all. The result thereof is that it makes the displaceability of one spreader arm portion completely independent from the displacement and positioning of the medium outlets of other spreader arm portions whose medium outlets are pivotable in the opposite direction. Thus, the medium outlets of these spreader arm portions can easily be rotated also in intermediate positions in which the spreader arm portions are not fully extended, as they are independent from one another. Also, the order in which the medium outlets are rotated is no longer restricted; thus, it is possible, for example, first to fully retract the spreader arm portions and only then to rotate the medium outlets. However, the opposite method is also among the possibilities. This increases the flexibility of the use of the agricultural device according to the present invention compared to the existing agricultural devices comprising slidable spreader arm portions. Another advantage of the structure according to the present invention is the fact that the portions are slidable with respect to each other, as a result of which a hinge is superfluous. The invention is not limited to two spreader arm portions and, in another variant embodiment, the spreader arm could also consist of at least three or more mutually slidable spreader arm portions, wherein all spreader arm portions are provided with medium outlets, and wherein all spreader arm portions are displaceable with respect to each other between positions in which the spreader arm portions more or less overlap one another. It is preferable for the spreader arm portions to always at least partly overlap, as this makes it possible to ensure that spreader arm portions always have a sufficient degree of mutual connection, as a result of which the spreader arm maintains a sufficient degree of connection at any length. Using slidable portions also reduces the risk of damage of the spreader arm.

In one possible further variant embodiment, the medium outlets are made of a flexible material. Consequently, when coming into contact with the ground, the medium outlets are prevented from becoming stuck in the soil, which is the case, in particular, for the medium outlets which are downwardly rotatable on the side which is directed to the front with respect to the direction of travel. The medium outlets may be configured in such a way that they, depending on the direction of movement, move concomitantly in the longitudinal direction of the vehicle. It is furthermore possible for the medium outlets to exert a force on the agricultural land while they are moving concomitantly.

The spreader arm portions may contain a frame, in which the frame is provided, in a longitudinal direction, with at least two spaced-apart uninterrupted structural parts (situated at different levels in an operating position of the arm). The uninterrupted structural parts in the frame of a spreader arm portion are able to absorb a pressure load and a tensile load, respectively. The interaction of the loads on the uninterrupted structural parts contributes to the strength of the spreader arm.

The spreader arm portions may be continuously variably slidable with respect to each other in order thus to adjust the working width of the spreader arm. This has the advantage that the spreader arm can be extended exactly up to the desired width; thus making it possible to discretely (continuously variably) adjust the working width, which is also a significant advantage with respect to the spreader arms according to the prior art. This makes it possible to optimize the working width with respect to the local conditions. An additional advantage of the continuously variable displacement is the more constant load when adjusting the length of the spreader arm compared to using a hinge and, in addition, the reduced sensitivity to shocks and/or sudden loads on the spreader arm. In a further embodiment, it is conceivable for one end of the spreader arm to be provided with at least one sensor, which sensor senses the surface to be treated and by means of which intelligent control of the spreader arm can be actuated in order to automatically adjust the working width.

The spreader arm may be extendable in the longitudinal direction up to a length of more than 10 metres, preferably more than 12 metres and more preferably more than 18 metres. This makes it possible to achieve a very large working width, so that fewer runs are necessary in order to cover a surface to be treated in its entirety, resulting in a saving in time and fuel.

The spreader arm may be configured in such a way that the spreader arm is provided with spaced-apart medium outlets along its entire length during displacement of the spreader arm portions with respect to each other. As a result thereof, the entire length of the spreader arm can be used for spreading medium and the spreading density can be regulated as well. The medium outlets on the spreader arm portions may be placed at a predetermined fixed distance apart. This predetermined distance apart, the pitch, may be, for example, between 10 cm and 50 cm, preferably between 20 cm and 30 cm. By positioning the spreader arm portions offset by half a pitch with respect to each other, it is possible to halve the mutual distance between the medium outlets with respect to the fixed pitch over at least a section of the spreader arm. In this way, it becomes possible to dispense the medium at a higher spreading density.

In an alternative variant embodiment of the present invention, the medium outlets of the at least two spreader arm portions are rotatable together about the longitudinal axis in the same direction. Provided there is also at least one spreader arm portion whose medium outlets are rotatable in the opposite direction, rotation of two spreader arm portions in the same direction can take place in the direction of travel of the vehicle or in the direction facing away from the direction of travel. The medium outlets which are rotatable in the same direction can be positioned in line in the position facing the ground in a simple manner, thus making even spreading of the medium easier.

Rotating the medium outlets about the longitudinal axis can also take place in independent and individual sections. Thus, it is possible for a first section with medium outlets to be turned to the ground while simultaneously a second section with medium outlets is turned upwards. This provides more choice in spreading or not spreading pumpable medium over the land. When applying the medium, it is for example possible for the second section to be turned upwards, while the first section is turned towards the ground and medium only flows through the medium outlets in this first section.

In order to ensure that medium is spread on both sides of the supporting vehicle and to bring about a weight balance, in a variant embodiment, the supporting frame comprises two spreader arms which are pivotably connected to opposite sides of the supporting frame and which both comprise extendable spreader arm portions. In this way, it is possible to attach two spreader arms on opposite sides of the supporting frame so as to be able to rotate in such a way that when the supporting frame is coupled to a vehicle, the spreader arms are situated on both sides of the supporting vehicle in a transport position. Not only does this result in an increase in the working width, but the balance of the agricultural device is also improved; the weight which is attached on either side of the supporting frame will usually be more or less the same (because the spreader arms are of similar design and have been extended to the working width). An agricultural device according to the present invention which is provided with two spreader arms can also be configured in such a way that both spreader arms are rotatable about the same horizontal axis together.

In order to provide a spreader arm which can be adjusted more accurately, at least one of the medium outlets may be provided with an adjustable shut-off valve. This makes it possible to regulate the supply to one or more medium outlets as desired. Preferably, all medium outlets are provided with the aforementioned adjustable shut-off valve, with all shut-off valves being individually and separately adjustable. In a further variant embodiment, the agricultural device is provided with an intelligent shut-off valve control unit for controlling the at least one adjustable shut-off valve. As a result thereof, it is possible to adjust the medium output for each outlet as desired. Thus, there may, for example, be an undesirable higher spreading density of the medium at the location of possibly overlapping spreader arm portions compared to the locations where the spreader arm portions do not overlap. Another possibility of adjustably closing medium outlets is that the spread of medium at micro level can be optimised. This is understood to mean that a plot of land to be treated possibly does not have to be provided with the same amount of medium everywhere. Using drone footage, it is for example possible to see which areas require more or less medium (manure, seed, insecticide, natural crop protection etc.), making it possible to further optimise spreading of the medium. In optimising the spreading of medium, it is also possible to use automatic position determination in combination with, for example, satellite navigation and/or the use of beacons. Yet another possibility is that an intelligent shut-off valve control unit makes it possible, when spreading medium on partly overlapping strips, to prevent locations which are passed over twice from being covered with medium twice as well.

The supporting frame is preferably provided with coupling and locking means for coupling and locking the agricultural device to a supporting vehicle. In addition to mechanically coupling the supporting frame to a vehicle, it is also preferable for the at least one medium line to be provided with a coupling for connection to a supply of pumpable medium which forms part of the supporting vehicle or a neighbouring buffer by means of an external mobile or stationary supply system. Thus, the supporting vehicle may be provided with a (manure) tank or may pull a tank trailer which ensures the supply of the pumpable medium. Another possibility is that the coupling for supplying pumpable medium is directly connected to a stationary buffer (such as for example a manure silo) via a flexible connection (hose). Because the agricultural device usually also comprises various drive mechanisms (such as for example cylinders to pivot the spreader arm(s) and cylinders to rotate the spreader arm(s) about a horizontal axis), the agricultural device is preferably also provided with one or more (hydraulic and/or pneumatic) couplings for controllably connecting the plurality of drive mechanisms to the vehicle. In order to lock the spreader arm(s) in the transport position, it is also possible to provide one or more locks.

The agricultural device may be provided with at least one distribution device, in which the distribution device is provided with at least one central medium supply and several medium discharges, in which the discharges are connected to the medium outlets. Thus, an even distribution of the medium can be achieved across the various medium outlets, which results in a more even distribution of medium across the land. Preferably, at least one distribution device is fitted to each spreader arm.

The spreader arm portions may be slidable with respect to each other by way of a roll or slide guide. This will facilitate length adjustment and increase the service life as friction is limited to a minimum. Preferably, several roll elements are used, which roll elements are installed on one of the spreader arm portions and rest on the other spreader arm portion which cooperates therewith. This not only reduces the mutual friction, but as the roll elements are made to rest on a part of the other spreader arm portion, the stiffness of the connection can also be increased.

The present invention also provides a method for adjusting the working width of an agricultural device for spreading a pumpable medium which is displaceable by means of a vehicle according to Claim 12. This method makes it possible to achieve the advantages as have already been described above by means of the agricultural device according to the present invention.

In a further variant embodiment, the method also comprises the process step of: d) actuating at least one adjustable shut-off valve in the medium outlets. This enables the agricultural device to selectively dispense medium once the medium outlets have been positioned as desired, as has already been indicated above by means of the agricultural device. The abovementioned advantages of the agricultural device according to the present invention are also advantages relating to the present method for adjusting the working width of an agricultural device which is displaceable by means of a vehicle.

In order to further increase the flexibility of the present method, the adjustment of the length of the spreader arm is performed in a substantially continuously variable way. In this way, spreading may be started immediately and it is also possible to displace the spreader arm portions during spreading.

The present invention will be explained further by means of the non-limiting exemplary embodiments which are illustrated in the following figures, in which:
- Fig. 1a shows a perspective view of a variant embodiment of an agricultural device according to the invention which is coupled to a supporting vehicle, in which the spreader arm is in a folded-in transport position;
- Fig. 1b shows a perspective view of the agricultural device from Fig. 1a in a folded-out position, in which the medium outlets are in an inactive upwardly directed position;
- Fig. 1c shows a perspective view of the agricultural device from Figs. 1a and 1b in a folded-out position, in which the medium outlets are in an active position facing the ground;
- Fig. 1d shows a perspective view of the agricultural device from Figs. 1a-1c, in which only some of the medium outlets are in an active position facing the ground;
- Fig. 2 shows a rear view of the agricultural device from Figs. 1a- 1c in a folded-out active position, in which the spreader arm portions are extended compared to the position as illustrated in Fig. 1c; and
- Fig. 3 shows a perspective view of a detail of the roll or slide guide between two cooperating spreader arm portions.

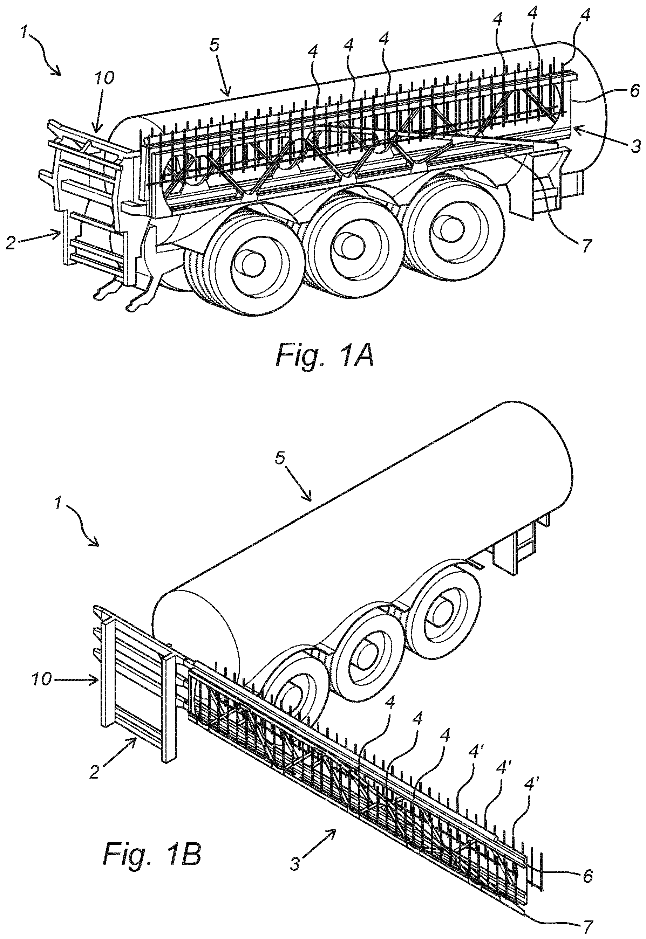

Fig. 1a shows a supporting vehicle 1 which incorporates a tank 5. On the rear side of the supporting vehicle 1, an agricultural device 10 according to the present invention is attached. The agricultural device 10 for spreading a pumpable medium over agricultural land is provided with a supporting frame 2 which is coupled to the rear side of the vehicle 1. A spreader arm 3 is attached on both sides of the supporting frame 2 so as to be pivotable (for the sake of clarity, this figure only shows one spreader arm 3) and the spreader arm 3 is provided with several medium outlets 4 by means of which a pumpable medium can be spread over the ground. In the position illustrated here, the spreader arm 3 is substantially situated parallel to the direction of travel of the vehicle 1. This position is also referred to as the transport position, in which position the medium outlets 4 are directed upwards, so that no medium will leak from the medium outlets 4 at all. For the sake of clarity, the medium lines extending from the supporting frame 2 along the spreader arm 3 to the medium outlets 4 and a distributor provided on the spreader arm 3 are not illustrated. In connection with the present invention, the fact that the spreader arm 3 consists of two spreader arm portions 6, 7 which are slidable with respect to each other in the longitudinal direction is highly relevant. The spreader arm portions 6, 7 are each provided with medium outlets 4, 4' which overlap one another (please note this is more clearly shown in the subsequent Fig. 1b). Here, the spreader arm portions 6, 7 are pushed into one another. Here, it can also clearly be seen that the medium outlets 4, 4' are situated on both sides of the spreader arm 3, which is possible because the medium outlets 4, 4' of the spreader arm portions 6, 7 are rotatable about the longitudinal axis in directions which are turned away from each other.

Fig. 1b again shows the vehicle 1 with the same agricultural device 10 from Fig. 1a, but now the spreader arm 3 has been moved from the transport position to a folded-out position extending at right angles to the direction of travel of the vehicle 1. To this end, the spreader arm is turned with respect to the supporting frame 2 which is fixedly connected to the supporting vehicle 1. Also, in the folded-out position as illustrated in this figure, the medium outlets 4, 4' situated on both sides of the spreader arm portions 6, 7 are still in the upwardly facing position, so that no medium will flow out of the medium outlets 4. The illustrated position thus relates to a folded-out, but not yet active position.

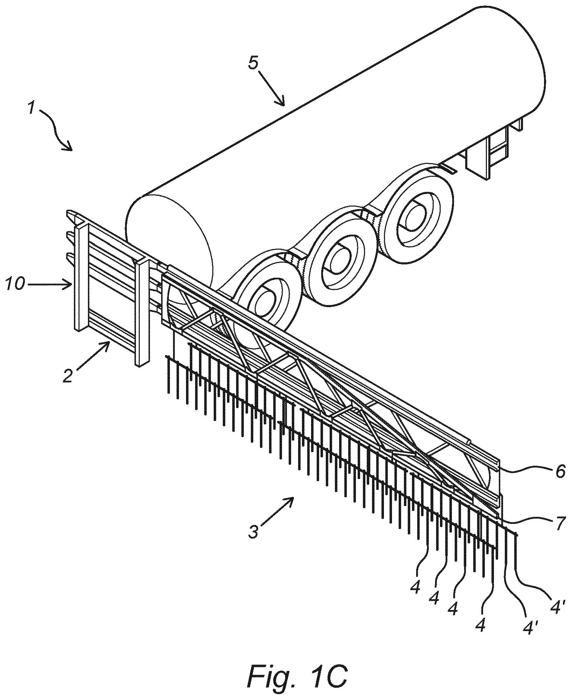

Fig. 1c again shows the vehicle 1 with the same agricultural device 10 from Figs. 1a and 1b, in which the spreader arm 3 is in the folded-out position. However, contrary to Fig. 1b, the medium outlets 4, 4' of the spreader arm portions 6, 7 are now turned around the longitudinal axis of the spreader arm 3, as a result of which they at least partly face downwards (towards the ground). In this case, the medium outlets 4, 4' of the separate spreader arm portions 6, 7 are rotated about the longitudinal axis in directions facing away from each other. The spreader arm portions 6, 7 overlap one another, but this does not limit rotation of the medium outlets 4, 4'. The medium outlets 4, 4' can be pivoted downwards in any random position of the spreader arm portions 6, 7 with respect to each other.

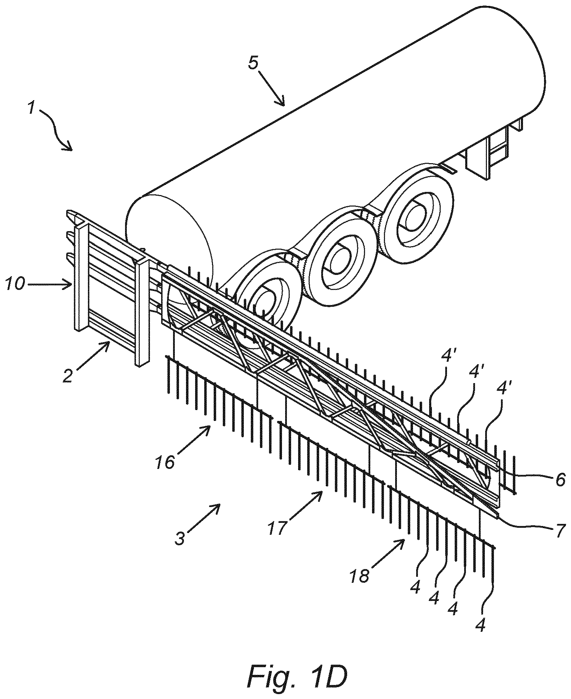

Fig. 1d again shows the vehicle 1 with the same agricultural device 10 from Figs. 1a - 1c, in which the spreader arm 3 is in a folded-out position. Contrary to Fig. 1c, only half the medium outlets 4, 4' of the spreader arm portions 6, 7 are now turned about the longitudinal axis of the spreader arm 3, as a result of which the medium outlets 4 on the second spreader arm portion 7 face downwards (to the ground). It is possible to rotate the medium outlets 4, 4' of each spreader arm portion 6, 7 independently and individually. In this way, there is more flexibility with regard to the positions of the medium outlets which are turned towards the ground. It is also conceivable that (not shown in this figure), for example, a central segment 16 of the respective spreader arm portion 7 is rotated about the longitudinal axis in an upward direction individually and independently of the other two segments 17, 18. The invention is not limited to a variant embodiment with only three segments 16, 17, 18.

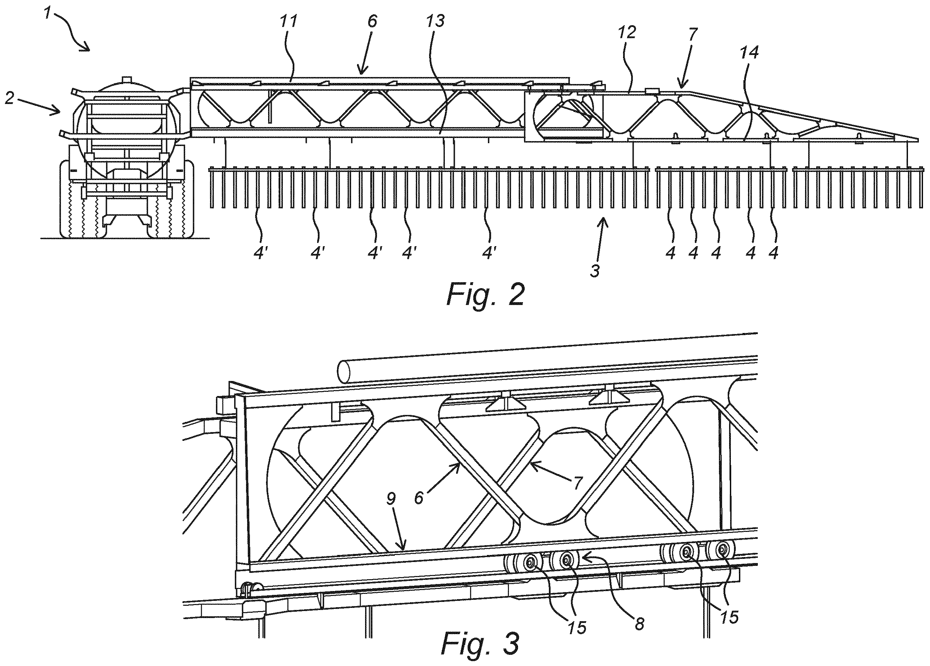

Fig. 2 shows the vehicle 1 with the same agricultural device 10 from Figs. 1a- 1c in side view shown in a folded-out position of the spreader arm 3 and with the medium outlets 4, 4' facing to the ground. However, contrary to Fig. 1c, both spreader arm portions 6, 7 are displaced with respect to each other in such a way that the working width of the agricultural device 10 is maximized. Both spreader arm portions 6, 7 are provided with a truss structure in which the top girders 11, 12 will be subjected to tensile load and wherein the bottom girders 13, 14 are subjected to compressive pressure. It can also be seen that the spreader arm portion 6 facing the supporting frame 2 is of a sturdier design at locations where it is subjected to a greater load than the spreader arm portion 7 facing away from the supporting frame 2.

Fig. 3 shows a view of a detail of a variant embodiment of an agricultural device according to the present invention, in which the spreader arm portions 6, 7 are slidable with respect to each other by way of a roll guide 8. To this end, roll elements 15 are attached to one spreader arm portion 6, the roll elements 15 being formed in such a way that a diameter of a roll element 15 corresponds to the width of a guide element 9 which is joined to the other spreader arm portion 7. The roll elements 15 contribute to a reduction in the resistance to which the spreader arm portions 6, 7 are subjected when they are being displaced with respect to each other.

## Claims

1. Agricultural device (10) for spreading a pumpable medium over agricultural land, comprising:
- a supporting frame (2) which is configured to be connected to a vehicle (1);
- at least one first spreader arm (3) which is pivotably connected to the supporting frame (2) and provided with pumpable medium outlets (4), which first spreader arm (3) is movable between a folded-out position which extends substantially transversely to the direction of travel of the vehicle (1) and laterally from the supporting frame (2) and a transport position which extends substantially in the direction of travel of the vehicle (1), in the longitudinal direction from the supporting frame (2); and
- a pumpable medium line which extends from the supporting frame (2) along the spreader arm (3) towards the pumpable medium outlets (4);
in which the spreader arm (3) comprises at least two portions (6, 7) which are slidable in the longitudinal direction with respect to each other, which spreader arm portions (6, 7) are each provided with medium outlets (4) and which spreader arm portions (6, 7) are displaceable between two positions in which the spreader arm portions (6, 7) more or less overlap one another,
**characterized in that** the medium outlets (4) of the at least two spreader arm portions (6, 7) are rotatable about the longitudinal axis in directions which are turned away from each other.

2. Agricultural device (10) according to Claim 1, **characterized in that** the medium outlets (4) of the spreader arm portions (6, 7) are rotatable about the longitudinal axis in such a way that the medium outlets (4) are displaceable between a position in which the medium outlets (4) are substantially turned upwards and a position in which the medium outlets (4) are turned substantially towards the ground.

3. Agricultural device (10) according to Claim 1 or 2, **characterized in that** the spreader arm portions (6, 7) are continuously variably slidable with respect to each other.

4. Agricultural device (10) according to one of the preceding claims, **characterized in that** the spreader arm (3) is extendable in the longitudinal direction up to a length of more than 10 metres, preferably more than 12 metres and more preferably up to more than 18 metres.

5. Agricultural device (10) according to one of the preceding claims, **characterized in that** the spreader arm (3) is configured in such a way that the spreader arm (3) is provided with spaced-apart medium outlets (4) along its entire length during displacement of the spreader arm portions (6, 7) with respect to each other.

6. Agricultural device (10) according to one of the preceding claims, **characterized in that** the medium outlets (4) of the at least two spreader arm portions (6, 7) are rotatable together about the longitudinal axis in the same direction.

7. Agricultural device (10) according to one of the preceding claims, **characterized in that** the supporting frame (2) comprises two spreader arms (3) which are pivotably connected to opposite sides of the supporting frame (2) and which both comprise extendable spreader arm portions (6, 7).

8. Agricultural device (10) according to one of the preceding claims, **characterized in that** at least one of the medium outlets (4) is provided with an adjustable shut-off valve.

9. Agricultural device (10) according to Claim 8, **characterized in that** the agricultural device (10) is provided with an intelligent shut-off valve control unit for controlling the at least one adjustable shut-off valve.

10. Agricultural device (10) according to one of the preceding claims, **characterized in that** the agricultural device (10) is provided with at least one distribution device, distribution device, in which the distribution device is provided with at least one central medium supply and several medium discharges, in which the discharges are connected to the medium outlets (4).

11. Agricultural device (10) according to one of the preceding claims, **characterized in that** the spreader arm portions (6, 7) are slidable with respect to each other by way of a roll or slide guide (8, 9, 15).

12. Method for adjusting the working width of an agricultural device (10) for spreading a pumpable medium which is displaceable with a vehicle (1) according to one of Claims 1- 11, comprising the following process steps:
a) displacing at least one spreader arm (3) from a transport position parallel to the direction of travel of the vehicle (1) to a folded-out position extending substantially transversely to the direction of travel of the vehicle (1) and laterally from the supporting frame (2);
b) sliding the spreader arm portions (6, 7) with respect to each other in the longitudinal direction of the spreader arm portions, and
c) rotating the medium outlets (4) of the at least two spreader arm portions (6, 7) about a longitudinal axis, wherein the medium outlets (4) of two spreader arm portions (6, 7) are displaced in directions which are turned away from each other from a first position in which the medium outlets (4) are turned substantially upwards to a second position in which the medium outlets (4) are turned substantially towards the ground.

13. Method according to Claim 12, **characterized in that** in a process step d) at least one adjustable shut-off valve in the medium outlets (4) is actuated.

14. Method according to Claim 12 or 13, **characterized in that** adjusting of the length of the spreader arm (3) is performed in a substantially continuously variable way.

## Patentansprüche

1. Landwirtschaftliche Vorrichtung (10) zum Verteilen eines pumpbaren Mediums über eine landwirtschaftliche Fläche, umfassend:
- einen Stützrahmen (2), der dazu ausgelegt ist, mit einem Fahrzeug (1) verbunden zu sein;
- mindestens einen ersten Verteilerarm (3), der schwenkbar mit dem Stützrahmen (2) verbunden und mit Pumpmediumauslässen (4) versehen ist, wobei der erste Verteilerarm (3) zwischen einer ausgeklappten Position, in der er sich im Wesentlichen quer zur Fahrtrichtung des Fahrzeugs (1) und lateral von dem Stützrahmen (2) aus erstreckt, und einer Transportposition, in der er sich im Wesentlichen in der Fahrtrichtung des Fahrzeugs (1) und in der Längsrichtung von dem Stützrahmen (2) aus erstreckt, bewegbar ist; und
- eine Pumpmediumleitung, die sich von dem Stützrahmen (2) entlang des Verteilerarms (3) hin zu den Pumpmediumauslässen (4) erstreckt;
wobei der Verteilerarm (3) mindestens zwei Abschnitte (6, 7) umfasst, die in der Längsrichtung in Bezug zueinander verschiebbar sind, wobei die Verteilerarmabschnitte (6, 7) jeweils mit Mediumauslässen (4) versehen sind und wobei die Verteilerarmabschnitte (6, 7) zwischen zwei Positionen verlagerbar sind, in denen die Verteilerarmabschnitte (6, 7) einander mehr oder weniger überlagern,
**dadurch gekennzeichnet, dass** die Mediumauslässe (4) der mindestens zwei Verteilerarmabschnitte (6, 7) um die Längsachse in Richtungen drehbar sind, die voneinander abgewandt sind.

2. Landwirtschaftliche Vorrichtung (10) nach Anspruch 1, **dadurch gekennzeichnet, dass** die Mediumauslässe (4) der Verteilerarmabschnitte (6, 7) um die Längsachse derart drehbar sind, dass die Mediumauslässe (4) zwischen einer Position, in der die Mediumauslässe (4) im Wesentlichen nach oben gedreht sind, und einer Position, in der die Mediumauslässe (4) im Wesentlichen hin zum Boden gedreht sind, verlagerbar sind.

3. Landwirtschaftliche Vorrichtung (10) nach Anspruch 1 oder 2, **dadurch gekennzeichnet, dass** die Verteilerarmabschnitte (6, 7) in Bezug zueinander stufenlos verschiebbar sind.

4. Landwirtschaftliche Vorrichtung (10) nach einem der vorhergehenden Ansprüche, **dadurch gekennzeichnet, dass** der Verteilerarm (3) in der Längsrichtung bis zu einer Länge von mehr als 10 Metern, vorzugsweise mehr als 12 Metern und weiter bevorzugt bis zu mehr als 18 Metern ausziehbar ist.

5. Landwirtschaftliche Vorrichtung (10) nach einem der vorhergehenden Ansprüche, **dadurch gekennzeichnet, dass** der Verteilerarm (3) derart ausgelegt ist, dass während einer Verlagerung der Verteilerarmabschnitte (6, 7) in Bezug zueinander der Verteilerarm (3) entlang seiner gesamten Länge mit beabstandeten Mediumauslässen (4) versehen ist.

6. Landwirtschaftliche Vorrichtung (10) nach einem der vorhergehenden Ansprüche, **dadurch gekennzeichnet, dass** die Mediumauslässe (4) der mindestens zwei Verteilerarmabschnitte (6, 7) gemeinsam in derselben Richtung um die Längsachse drehbar sind.

7. Landwirtschaftliche Vorrichtung (10) nach einem der vorhergehenden Ansprüche, **dadurch gekennzeichnet, dass** der Stützrahmen (2) zwei Verteilerarme (3) umfasst, die schwenkbar mit gegenüberliegenden Seiten des Stützrahmens (2) verbunden sind und die beide ausziehbare Verteilerarmabschnitte (6, 7) umfassen.

8. Landwirtschaftliche Vorrichtung (10) nach einem der vorhergehenden Ansprüche, **dadurch gekennzeichnet, dass** mindestens einer der Mediumauslässe (4) mit einem einstellbaren Absperrventil versehen ist.

9. Landwirtschaftliche Vorrichtung (10) nach Anspruch 8, **dadurch gekennzeichnet, dass** die landwirtschaftliche Vorrichtung (10) mit einer intelligenten Absperrventilsteuereinheit zum Steuern des mindestens einen einstellbaren Absperrventils versehen ist.

10. Landwirtschaftliche Vorrichtung (10) nach einem der vorhergehenden Ansprüche, **dadurch gekennzeichnet, dass** die landwirtschaftliche Vorrichtung (10) mit mindestens einer Verteilungsvorrichtung versehen ist, Verteilungsvorrichtung, wobei die Verteilungsvorrichtung mit mindestens einer zentralen Mediumzuführung und mehreren Mediumabführungen versehen ist, wobei die Abführungen mit den Mediumauslässen (4) verbunden sind.

11. Landwirtschaftliche Vorrichtung (10) nach einem der vorhergehenden Ansprüche, **dadurch gekennzeichnet, dass** die Verteilerarmabschnitte (6, 7) in Bezug zueinander mittels einer Rollen- oder Gleitführung (8, 9, 15) verschiebbar sind.

12. Verfahren zum Einstellen der Arbeitsbreite einer landwirtschaftlichen Vorrichtung (10) zum Verteilen eines pumpbaren Mediums, die mit einem Fahrzeug (1) verlagerbar ist, nach einem der Ansprüche 1-11, umfassend die folgenden Prozessschritte:
a) Verlagern mindestens eines Verteilerarms (3) von einer Transportposition parallel zur Fahrtrichtung des Fahrzeugs (1) zu einer ausgeklappten Position, in der er sich im Wesentlichen quer zur Fahrtrichtung des Fahrzeugs (1) und lateral von dem Stützrahmen (2) erstreckt;
b) Verschieben der Verteilerarmabschnitte (6, 7) in Bezug zueinander in der Längsrichtung der Verteilerarmabschnitte, und
c) Drehen der Mediumauslässe (4) der mindestens zwei Verteilerarmabschnitte (6, 7) um eine Längsachse, wobei die Mediumauslässe (4) von zwei Verteilerarmabschnitten (6, 7) in Richtungen, die voneinander abgewandt sind, von einer ersten Position, in der die Mediumauslässe (4) im Wesentlichen nach oben gedreht sind, zu einer zweiten Position, in der die Mediumauslässe (4) im Wesentlichen hin zum Boden gedreht sind, verlagert werden.

13. Verfahren nach Anspruch 12, **dadurch gekennzeichnet, dass** in einem Prozessschritt d) mindestens ein einstellbares Absperrventil in den Mediumauslässen (4) betätigt wird.

14. Verfahren nach Anspruch 12 oder 13, **dadurch gekennzeichnet, dass** Einstellen der Länge des Verteilerarms (3) in einer im Wesentlichen stufenlosen Weise durchgeführt wird.

## Revendications

1. Dispositif agricole (10) d'épandage d'un milieu pompable sur un terrain agricole, comprenant :
un cadre de support (2) qui est conçu pour être relié à un véhicule (1) ;
au moins un premier bras d'épandage (3) qui est relié de manière pivotante au cadre de support (2) et pourvu de sorties de milieu pompable (4), lequel premier bras d'épandage (3) étant mobile entre une position dépliée qui s'étend sensiblement transversalement à la direction de déplacement du véhicule (1) et latéralement par rapport au cadre de support (2) et une position de transport qui s'étend sensiblement dans la direction de déplacement du véhicule (1), dans la direction longitudinale par rapport au cadre de support (2) ; et
une conduite de milieu pompable qui s'étend du cadre de support (2) le long du bras d'épandage (3) vers les sorties de milieu pompable (4) ;
le bras d'épandage (3) comprenant au moins deux parties (6, 7) qui peuvent coulisser l'une par rapport à l'autre dans la direction longitudinale, lesquelles parties de bras d'épandage (6, 7) étant chacune pourvue de sorties de milieu (4) et lesquelles parties de bras d'épandage (6, 7) pouvant être déplacées entre deux positions dans lesquelles les parties de bras d'épandage (6, 7) se chevauchent plus ou moins l'une l'autre,
**caractérisé en ce que** les sorties de milieu (4) des au moins deux parties de bras d'épandage (6, 7) peuvent tourner autour de l'axe longitudinal dans des directions qui sont tournées à l'opposé l'une à l'autre.

2. Dispositif agricole (10) selon la revendication 1, **caractérisé en ce que** les sorties de milieu (4) des parties de bras d'épandage (6, 7) peuvent tourner autour de l'axe longitudinal de sorte que les sorties de milieu (4) puissent être déplacées entre une position dans laquelle les sorties de milieu (4) sont sensiblement tournées vers le haut et une position dans laquelle les sorties de milieu (4) sont sensiblement tournées vers le sol.

3. Dispositif agricole (10) selon la revendication 1 ou 2, **caractérisé en ce que** les parties de bras d'épandage (6, 7) peuvent coulisser de manière continuellement variable l'une par rapport à l'autre.

4. Dispositif agricole (10) selon l'une des revendications précédentes, **caractérisé en ce que** le bras d'épandage (3) est extensible dans la direction longitudinale jusqu'à une longueur de plus de 10 mètres, de préférence de plus de 12 mètres et plus préférentiellement jusqu'à plus de 18 mètres.

5. Dispositif agricole (10) selon l'une des revendications précédentes, **caractérisé en ce que** le bras d'épandage (3) est conçu de sorte que le bras d'épandage (3) soit pourvu de sorties de milieu (4) espacées sur toute sa longueur pendant le déplacement des parties de bras d'épandage (6, 7) l'une par rapport à l'autre.

6. Dispositif agricole (10) selon l'une des revendications précédentes, **caractérisé en ce que** les sorties de milieu (4) des au moins deux parties de bras d'épandage (6, 7) peuvent tourner ensemble autour de l'axe longitudinal dans la même direction.

7. Dispositif agricole (10) selon l'une des revendications précédentes, **caractérisé en ce que** le cadre de support (2) comprend deux bras d'épandage (3) qui sont reliés de manière pivotante aux côtés opposés du cadre de support (2) et qui comprennent tous deux des parties de bras d'épandage (6, 7) extensibles.

8. Dispositif agricole (10) selon l'une des revendications précédentes, **caractérisé en ce qu'**au moins une des sorties de milieu (4) est pourvue d'une vanne d'arrêt réglable.

9. Dispositif agricole (10) selon la revendication 8, **caractérisé en ce que** le dispositif agricole (10) est pourvu d'une unité de commande intelligente de vanne d'arrêt pour commander l'au moins une vanne d'arrêt réglable.

10. Dispositif agricole (10) selon l'une des revendications précédentes, **caractérisé en ce que** le dispositif agricole (10) est pourvu d'au moins un dispositif de distribution, le dispositif de distribution étant pourvu d'au moins une alimentation en milieu centrale et de plusieurs décharges de milieu, les décharges étant reliées aux sorties de milieu (4).

11. Dispositif agricole (10) selon l'une des revendications précédentes, **caractérisé en ce que** les parties de bras d'épandage (6, 7) peuvent coulisser l'une par rapport à l'autre au moyen d'un rouleau ou d'un guide de coulissement (8, 9, 15).

12. Procédé de réglage de la largeur de travail d'un dispositif agricole (10) pour l'épandage d'un milieu pompable qui est déplaçable avec un véhicule (1) selon l'une des revendications 1 à 11, comprenant les étapes consistant à :
a) déplacer au moins un bras d'épandage (3) d'une position de transport parallèle à la direction de déplacement du véhicule (1) à une position dépliée s'étendant sensiblement transversalement à la direction de déplacement du véhicule (1) et latéralement par rapport au cadre de support (2) ;
b) faire coulisser les parties de bras d'épandage (6, 7) l'une par rapport à l'autre dans la direction longitudinale des parties de bras d'épandage, et
c) faire tourner les sorties de milieu (4) des au moins deux parties de bras d'épandage (6, 7) autour d'un axe longitudinal, les sorties de milieu (4) de deux parties de bras d'épandage (6, 7) étant déplacées dans des directions qui sont tournées à l'opposé l'une à l'autre d'une première position dans laquelle les sorties de milieu (4) sont tournées sensiblement vers le haut à une seconde position dans laquelle les sorties de milieu (4) sont tournées sensiblement vers le sol.

13. Procédé selon la revendication 12, **caractérisé en ce que**, dans une étape d) au moins une vanne d'arrêt réglable dans les sorties de milieu (4) est actionnée.

14. Procédé selon la revendication 12 ou 13, **caractérisé en ce que** le réglage de la longueur du bras d'épandage (3) est effectué de manière sensiblement variable en continu.
